Europäisches Patentamt

European Patent Office

Office européen des brevets

(11) Veröffentlichungsnummer: **0 201 658**
**B1**

(12) **EUROPÄISCHE PATENTSCHRIFT**

(45) Veröffentlichungstag der Patentschrift:
**24.05.89**

(21) Anmeldenummer: **86100137.8**

(22) Anmeldetag: **08.01.86**

(51) Int. Cl.⁴: **A 01 C 15/00,** A 01 C 17/00,
A 01 C 7/00, A 01 M 7/00

(54) **Landmaschine mit einem elektronischen Dosiergerät und einer Signalübertragungseinrichtung.**

(30) Priorität: **12.01.85 DE 3500886**

(43) Veröffentlichungstag der Anmeldung:
**20.11.86 Patentblatt 86/47**

(45) Bekanntmachung des Hinweises auf die Patenterteilung:
**24.05.89 Patentblatt 89/21**

(84) Benannte Vertragsstaaten:
**DE FR GB**

(56) Entgegenhaltungen:
**EP-A- 0 011 991**
**EP-A- 0 086 029**
**EP-A- 0 086 031**
**DE-A- 3 043 602**
**DE-A- 3 310 424**
**FR-A- 2 390 081**

**Zeitschrift "LB" 31/1984, Paul CLEMENS:"Interessantes von der DLG für die Mineraldüngung, Seite 1454**

(73) Patentinhaber: **Amazonen-Werke H. Dreyer GmbH & Co. KG, Am Amazonenwerk 9-13, D-4507 Hasbergen-Gaste (DE)**

(72) Erfinder: **Oberheide, Friedrich, Kiefernweg 15, D-4507 Hasbergen (DE)**
Erfinder: **Bresch, Robert, Berliner Ring 26, D-4550 Bramsche (DE)**
Erfinder: **Müller, Heinrich, Schwarzriethweg 12, D-4796 Salzkotten (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Landmaschine, bestehend aus einem Schlepper und an diesem anzukoppelnden landwirtschaftlichen Verteilmaschinen gemäß dem Oberbegriff des Anspruches 1.

Eine derartige Landmaschine ist bereits durch den von Ing. (grad.) Paul Clemens geschriebenen Artikel «Interessantes von der DLG für die Mineraldüngung» in der Zeitschrift «LB» 31/1984 auf der Seite 1454 bekannt. In diesem Artikel wird ein als Verteilmaschine (Pendelstreuer) ausgebildetes Anbaugerät mit einem elektronischen Dosiersystem beschrieben. Mittels dieses elektronischen Dosiersystems wird über Sensoren die Arbeitsgeschwindigkeit und die Ausbringmenge ermittelt. Anhand dieser Daten wird das Dosiergerät elektronisch reguliert. Über den Elektronikrechner werden die Daten gespeichert und auf Start- und Stopkommando automatisch kontrolliert und eingestellt. Weiterhin berücksichtigt die Steuereinheit dieses elektronischen Dosiersystems die Arbeitsbreite sowie die Schaltung von Teilbreiten, so daß nach Beendigung der Arbeit neben der bearbeiteten Fläche auch die ausgebrachte Düngermenge angezeigt werden kann. Dieses elektronische Dosiersystem kann auch für Pflanzenschutzspritzen und Sämaschinen verwendet werden.

Der Einsatz solcher elektronischen Dosiersysteme ist besonders vorteilhaft und bietet dem Landwirt die Möglichkeit zur besseren Überwachung und Einhaltung der gewünschten Ausbringmenge der von ihm auszubringenden Materialien, wie beispielsweise Mineraldünger, Saatgut oder Pflanzenschutzmittel. Eine mit einem elektronischen Dosiersystem ausgerüstete Verteilmaschine sorgt neben der exakten Einhaltung der gewünschten Aussaatmenge auch für ein Einsparen der auszubringenden Materialien, da es dem Landwirt ermöglicht wird, die auszubringenden Materialien exakter auszubringen und sich somit besser den jeweiligen Einsatzverhältnissen anzupassen. Der Einsatz eines elektronischen Dosiersystems für mehrere Maschinen ist besonders vorteilhaft, da sich die Anschaffungskosten eines solchen universell einsetzbaren elektronischen Dosiersystems auf die einzelnen Maschinen verteilen.

Das durch den Artikel «Interessantes von der DLG für die Mineraldüngung» bekanntgewordene elektronische Dosiersystem weist jedoch einen besonders schwerwiegenden Nachteil in der Bedienbarkeit auf. So muß der Landwirt beim Einsatz dieses elektronischen Dosiersystems für mehrere Maschinen bei jedem Wechsel der Verteilmaschine die maschinenspezifischen Werte neu in das elektronische Dosiersystem eingeben, was sich besonders beim häufigen Wechsel der Verteilmaschine als lästig und zeitaufwendig erweist.

Der Erfindung liegt daher die Aufgabe zugrunde, den Anschluß des Dosiersystems und die Abstimmung auf die jeweilige Verteilmaschine für den Landwirt wesentlich zu erleichtern.

Diese Aufgabe wird erfindungsgemäß durch den kennzeichnenden Teil des Anspruchs 1 gelöst. Infolge dieser Maßnahmen wird die Bedienbarkeit dieses Dosiersystemes in vorteilhafter Weise wesentlich erleichtert. Die sich ständig wiederholende Eingabe von maschinenspezifischen Werten durch den Landwirt entfällt und läßt dieses in erfindungsgemäßer Weise ausgebildete Dosiersystem zu einem besonders schnell und einfach zu bedienenden Gerät werden. Über das Codierungssystem erkennt ein Grundelement jeweils die Besonderheiten des Anbaugerätes bzw. der Sensoren. Hierbei weisen die an den anzukoppelnden Verteilmaschinen angeordneten Sensoren eine Codierungsschaltung auf, welche Signale an das Grundelement übermittelt, wobei die Signalübertragungseinrichtung das Codierungssystem beinhaltet und die Codierung in der den Verteilmaschinen jeweils zugeordneten Schaltung enthalten ist. Die den Verteilmaschinen jeweils zugeordnete Codierungsschaltung übermittelt entsprechende Signalformationen über das entsprechende Anbaugerät an das Grundelement. Das Grundelement erkennt so über die von der Signalübertragungseinrichtung übermittelten Signalinformationen, welche Verteilmaschine an den Schlepper angekoppelt ist. Das Grundelement weist einen Mikroprozessor auf, in dem verschiedene Rechner- bzw. Steuerprogramme eingespeichert sind, so daß aufgrund der übermittelten Signale automatisch das richtige Programm für die jeweilig anzukoppelnde Verteilmaschine abrufbar ist.

Weiterhin ist erfindungsgemäß vorgesehen, daß die Signalübertragungseinrichtung ein System zur drahtlosen Signalübertragung umfaßt, wobei die Codierungssignale ebenfalls drahtlos übertragbar sind. Infolge dieser Maßnahmen läßt sich das Grundelement nahezu an beliebiger Stelle des Schleppers anordnen. Bei den sich immer mehr durchsetzenden Kabinenschleppern zeichnet sich diese drahtlose Übertragung durch die einfache, bequeme Handhabung des Grundelementes in besonders vorteilhafter Weise aus.

In einer anderen Ausführung ist erfindungsgemäß vorgesehen, daß die Signalübertragungseinrichtung eine Kabelverbindung aufweist, wobei die Kabelverbindung als eine trennbare Steckverbindung ausgebildet ist und Elemente aufweist, die derart ausgebildet sind, daß der Mikroprozessor erkennt, welche Verteilmaschine angeschlossen ist. In diesem Mikroprozessor sind verschiedene Rechnerprogramme eingespeichert. Über die hergestellte Steckverbindung wird automatisch das richtige Rechnerprogramm aus dem Mikroprozessor abgerufen. Die Maschine ist sofort einsatzbereit, lästiges und zeitaufwendiges Eingeben der entsprechenden Werte in das Grundelement entfallen.

Die Erfindung sieht zudem vor, daß der Mikroprozessor über das Codierungssystem erkennt, in welcher Form die Gesamtarbeitsbreite der Maschine in Teilbreiten und in wieviel Teilbreiten die Gesamtarbeitsbreite der Maschine zerlegt ist. Diese Teilbreiten sind über eine Fernbedienung durch Abschalten der entsprechenden Dosierelemente ab- bzw. zuschaltbar, und der Mikroprozessor erkennt automatisch, welche bzw. wieviel Teilbreiten ab- bzw. zugeschaltet sind. Über die übermittelten Informationen des Codierungssystems an dem Mikroprozessor erkennt dieser die Arbeitsbreite der angeschlossenen Verteilmaschine, wobei es dem Mikroprozessor ebenfalls möglich ist über die Informationen des Codierungssystems die Breite jeder Teilbreite zu ermitteln. Der Landwirt muß lediglich die gewünschte Ausbringmenge in den Mikroprozessor eingeben, falls diese von dem Wert der evtl. schon gespeicherten Ausbringmenge abweicht. Der Mikroprozessor errechnet automatisch die Ausbringmenge unter Berücksichtigung der jeweiligen Arbeitsbreite und steuert die Einstellung der Dosierorgane. Während des Ausbringens des Materials werden laufend von den Sensoren aufgenommene Signale, die proportional die momentanen Ausbringmengen sind, an den Mikroprozessor übermittelt. Dieser führt einen Vergleich zwischen Soll- und Istwert durch. Bei einer Abweichung zwischen Soll- und Istwert wird automatisch eine Verstellung der Dosierorgane vorgenommen, so daß die gewünschte Ausbringmenge immer exakt eingehalten wird.

Die Ausbildung eines universell einsetzbaren elektronischen Dosiersystems in erfindungsgemäßer Weise erleichtert dem Landwirt den Anschluß des Dosiersystems und die Abstimmung auf die jeweilige Verteilmaschine enorm, da sämtliche maschinenspezifischen Einstellungen entfallen.

Weitere Einzelheiten der Erfindung sind der Beispielbeschreibung und den Zeichnungen zu entnehmen. Hierbei zeigen

Fig. 1 den als Grundelement ausgebildeten Mikroprozessor, der verschiedenen Schleppern und Anbaugeräten zugeordnet werden kann, bei drahtloser Übertragung der Codierungssignale,

Fig. 2 einen Schlepper, der mit verschiedenen Anbaugeräten gekoppelt werden kann, wobei die Codierungssignale des Schleppers drahtlos übertragen werden,

Fig. 3 der Schlepper gemäß Fig. 2 in einer kleineren Ausführung

Fig. 4 eine als Zentrifugaldüngerstreuer erfindungsgemäß ausgebildete Verteilmaschine, zur drahtlosen Übertragung der Codierungssignale,

Fig. 5 eine als Pneumatikdüngerstreuer, zur drahtlosen Übertragung der Codierungssignale ausgebildete Verteilmaschine,

Fig. 6 eine als Pflanzenschutzspritze, zur drahtlosen Übertragung der Codierungssignale ausgebildete Verteilmaschine,

Fig. 7 eine als Sämaschine, zur drahtlosen Übertragung der Codierungssignale ausgebildete Verteilmaschine,

Fig. 8 eine als Einzelkornsägerät, zur drahtlosen Übertragung der Codierungssignale ausgebildete Verteilmaschine,

Fig. 9 den als Grundelement ausgebildeten Mikroprozessor, der verschiedenen Schleppern und Anbaugeräten zugeordnet werden kann, bei nicht drahtloser Übertragung der Codierungssignale,

Fig. 10 einen Schlepper, der mit verschiedenen Anbaugeräten gekoppelt werden kann, und dessen Codierungssignale nicht drahtlos übertragen werden,

Fig. 11 der Schlepper gemäß Fig. 10 in einer kleineren Ausführung,

Fig. 12 eine als Zentrifugaldüngerstreuer, zur nicht drahtlosen Übertragung der Codierungssignale ausgebildete Verteilmaschine,

Fig. 13 ein als Pneumatikstreuer, zur nicht drahtlosen Übertragung der Codierungssignale ausgebildete Verteilmaschine,

Fig. 14 eine als Pflanzenschutzspritze, zur nicht drahtlosen Übertragung der Codierungssignale ausgebildete Verteilmaschine,

Fig. 15 eine als Sämaschine, zur nicht drahtlosen Übertragung der Codierungssignale ausgebildete Verteilmaschine und

Fig. 16 eine als Einzelkornsägerät, zur nicht drahtlosen Übertragung der Codierungssignale ausgebildete Verteilmaschine.

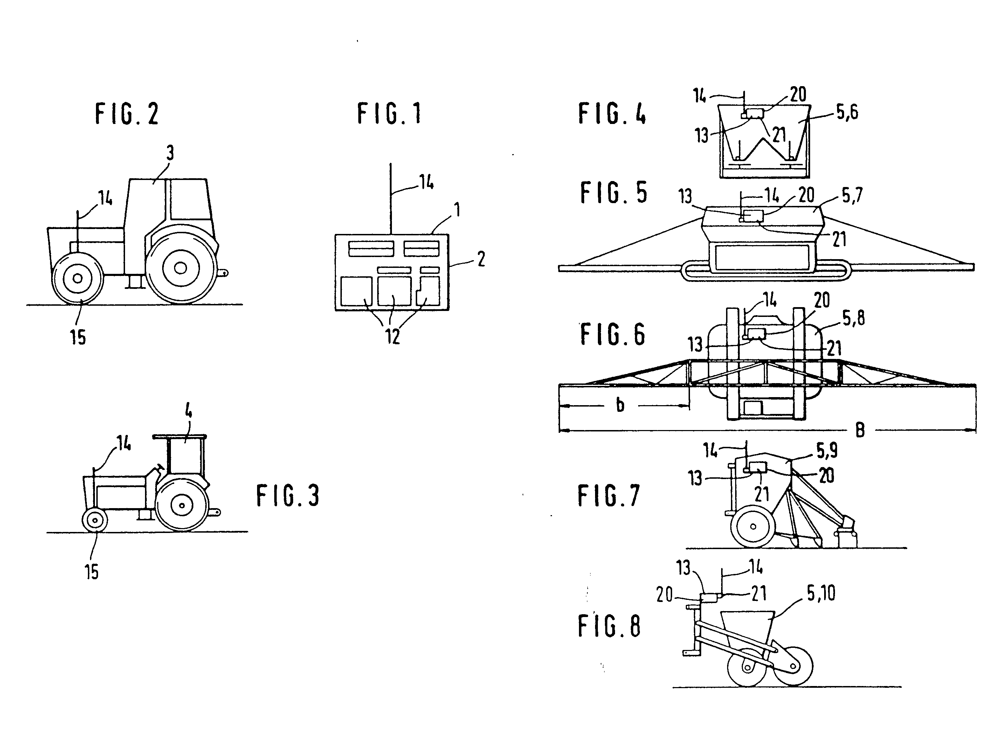

Die Fig. 1 bis 16 zeigen die Zuordnung des als Grundelement 1 ausgebildeten Mikroprozessors 2 zu den verschiedenen Schleppern 3 und 4 und zu den verschiedenen Verteilmaschinen. Diese Verteilmaschinen gemäß den Fig. 4 bis 8 bzw. 12 bis 16 sind als Anbaugeräte 5, beispielsweise bestehend aus einem Zentrifugaldüngerstreuer 6, einem Pneumatikdüngerstreuer 7, einer Pflanzenschutzspritze 8, einer Sämaschine 9 oder einem Einzelkorngerät 10, ausgebildet. Die an den Anbaugeräten 5 in bekannter und nicht dargestellter Weise angeordneten Sensoren weisen eine Codierungsschaltung auf, wobei die an diese Anbaugeräte 5 jeweils zugeordnete Codierungsschaltung entsprechende Signalinformationen über das entsprechende Anbaugerät 5 an das Grundelement 1 übermittelt. Das Grundelement 1 ist auf dem Schlepper 3, 4 angeordnet und erkennt über die von der Signalübertragungseinrichtung 11 übermittelten maschinenspezifischen Signalinformationen, welches Anbaugerät 5 an dem Schlepper 3, 4 angekoppelt ist. In diesem als Grundelement 1 ausgebildeten Mikroprozessor 2 sind verschiedene Rechner bzw. Steuerprogramme eingespeichert. Aufgrund der übermittelten Signale ruft der Mikroprozessor 2 automatisch das richtige Programm ab. Der Landwirt gibt jetzt lediglich über die Tastatur 12 des Grundelementes 1 die von ihm gewünschte Ausbringmenge ein, falls diese von dem evtl. bereits gespeicherten Einstellwert abweicht und das jeweilige Anbaugerät 5 ist einsatzbereit.

Die Signalübertragungseinrichtung 11 kann beispielsweise ein System zur drahtlosen Übertragung gemäß Fig. 1 bis 8 umfassen, wobei die Codierungssignale ebenfalls drahtlos übertragbar sind. Zur drahtlosen Übertragung der Signale sind an den Dosiergeräten 13, welche an den jeweiligen Anbaugeräten 5 angeordnet sind, und am Grundelement 1 Antennen 14 vorgesehen. Die Sensoren zur Geschwindigkeitserfassung am Schlepper 3, 4 sind beispielsweise am Schleppervorderrad 15 angebracht und auch mit Antennen 14 zur drahtlosen Signalübertragung ausgerüstet.

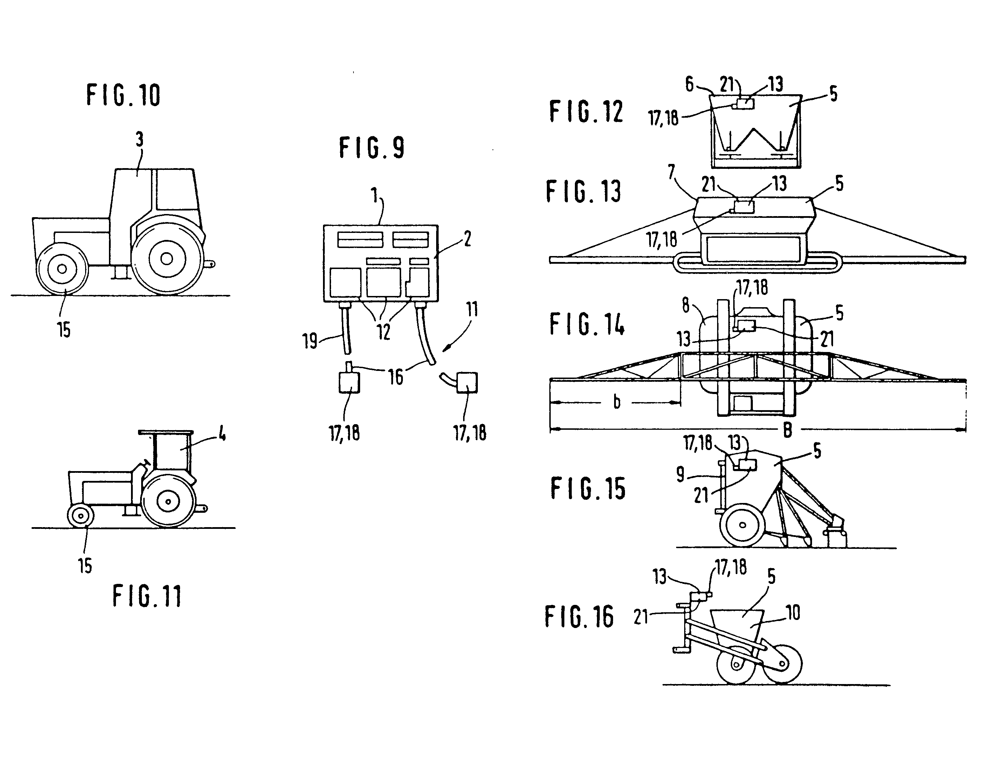

Die Fig. 9 bis 16 zeigen eine nicht drahtlose Signalübertragung. In diesem Fall weist die Signalübertragungseinrichtung 11 eine Kabelverbindung 16 auf, die als trennbare Steckverbindung 17 ausgebildet ist und Elemente 18 am Kabel 19 des Grundelementes 1 und am Dosiergerät 13 aufweist, über die das Grundelement 1 und das als Verteilmaschine ausgebildete Anbaugerät 5 miteinander verbunden werden. Über die hergestellte Steckverbindung 17 wird automatisch das richtige Rechnerprogramm des jeweiligen Anbaugerätes 5 aus den in dem Mikroprozessor 2 gespeicherten, verschiedenen Rechnerprogrammen abgerufen und das jeweilig an den Schleppern 3 und 4 angekoppelte Anbaugerät 5 ist betriebsbereit.

Im folgenden wird das erfindungsgemäße Codierungssystem näher erläutert:

Zum Erkennen des jeweilig angehängten Anbaugerätes 5 an den Schlepper 3, 4 werden dem Grundelement 1 codierte Signalinformationen über die Signalübertragungseinrichtung 11 übermittelt, wobei zwischen dem System der drahtlosen und nicht drahtlosen Signalübertragung unterschieden wird.

Bei der drahtlosen Signalübertragung werden für jedes Anbaugerät 5 unterschiedlich codierte Signalimpulse von dem Anbaugerät 5 ausgesandt. Diese codierten Impulse werden von dem Grundelement 1 über die Antenne 14 empfangen und dienen zum Erkennen des jeweiligen Anbaugerätes 5. Mit Hilfe des Codierungssystems erkennt der Mikroprozessor 2 weiterhin, in welcher Form die Gesamtarbeitsbreite B des Anbaugerätes 5 in Teilbreiten b und in wieviel Teilbreiten b die Gesamtarbeitsbreite B des Anbaugerätes 5 gemäß Fig. 6 zerlegbar ist. Hierzu ist die Gesamtarbeitsbreite B beispielsweise in Raster zu je 0,5 m aufgeteilt, wobei die einzelnen Teilbreiten b wiederum ein vielfaches dieser Raster sind. Jedes Raster erzeugt einen Impuls, der an das Dosiergerät 13 geleitet und hier entsprechend codiert wird. Von hier wird nun das codierte Signal über die Signalübertragungseinrichtung 11 an den Mikroprozessor 2 übermittelt, wobei der Mikroprozessor 2 über das übermittelte Signal erkennt, welche Breite jede Teilbreite und welche Arbeitsbreite die angeschlosene Verteilmaschine aufweist. Dieser Mikroprozessor 2 ruft aufgrund der übermittelten Signale das richtige Rechner- bzw. Steuerprogramm auf und nimmt bei Kenntnis der gewünschten Ausbringmenge automatisch die Einstellung der jeweiligen Anbaumaschine 5 vor. Über eine ebenfalls am Dosiergerät 13 befindliche Fernbedienung 20 sind die Teilbreiten b durch Abschalten der entsprechenden, nicht dargestellten Dosierelemente ab- bzw. zuschaltbar, was ein Verändern der Codierung zur Folge hat. Über diese veränderte Codierung erkennt der Mikroprozessor 2 automatisch, welche bzw. wieviele Teilbreiten ab- bzw. zugeschaltet sind.

Bei der drahtlosen Signalübertragung ist das Codierungssystem derart ausgebildet, daß die Codierung der zur Erkennung des jeweiligen Anbaugerätes 5 und deren spezifischen Kenngröße, von diesem Anbaugerät 5 erzeugten Impulse in einer Codierungsschaltung, welche in dem am Dosiergerät 13 angeordneten Gerätekasten 21 des jeweiligen Anbaugerätes 5 angeordnet ist, vorgenommen wird. Diese codierten Signale werden dann über die Signalübertragungseinrichtung 11, hier Antennensystem, an das Grundelement 1 übermittelt und vom Mikroprozessor in entsprechender Weise verarbeitet.

Bei der nicht drahtlosen Signalübertragung gemäß den Fig. 9 bis 16 beinhaltet die als Kabelverbindung 16 ausgebildete Signalübertragungseinrichtung 11 das Codierungssystem. Über die trennbare Steckverbindung 17 werden beim Zusammenfügen der jeweiligen Elemente 18 bestimmte Kontakte bzw. Kontaktkombinationen hergestellt. Diese Kontaktkombinationen übermitteln die Signalinformationen der jeweiligen Anbaumaschine 5 an den Mikroprozessor 2, dieser erkennt so anhand der codierten Signale, um welche Maschine es sich handelt, welche Gesamtarbeitsbreite B das angeschlossene Anbaugerät 5 aufweist, und in welcher Breite jede Teilbreite aufgeteilt ist bzw. welche und wieviele Teilbreiten b ab- bzw. zugeschaltet sind. Diese codierten Signalinformationen werden vom Mikroprozessor 2 in entsprechender Weise verarbeitet, so daß die Maschine 5 ohne vom Landwirt durchzuführende Eingaben in den Mikroprozessor 2 betriebsbereit ist.

Bei den Signalinformationen kann es sich zusätzlich zu den Informationen über die Teilbreite noch um Informationen über andere Kenngrößen der Anbaugeräte, wie beispielsweise Mengenregelung, Volumenregelung, Stückzahlregelung von Körnern, Signalzusammensetzung und Signalbeschaffenheit handeln.

## Patentansprüche

1. Landmaschine, bestehend aus einem Schlepper (3, 4) und an diesem anzukoppelnden landwirtschaftlichen Verteilmaschinen (5), wie Sämaschinen (9, 10), Düngerstreuer (6, 7) und Feldspritzen (8), mit einem Dosiersystem, welches aus einem Sensoren aufweisenden elektronsichen Dosiergerät (13) und einem mit diesem über eine Signalübertragungseinrichtung (11, 14, 16, 19) verbundenen und einen Mikroprozessor (2) aufweisenden Grundelement (1) besteht, wobei das Dosiersystem jeweils mit den an dem Schlepper (3, 4) anzukoppelnden Verteilmaschinen in Einsatz zu bringen ist und die jeweilige Arbeitsbreite und/oder Teilbreite der Verteilmaschinen (5) berücksichtigt, dadurch gekennzeichnet,

– daß das elektronsiche Dosiersystem aus einem ersten Teil, nämlich dem zur Definierung der Maschine dienenden elektronischen Dosiergerät (13), welches an der betreffenden Maschine angebracht ist, und aus einem zweiten Teil, nämlich dem den Mikroprozessor (2) aufweisenden Grundelement (1), welches auf dem Schlepper angebracht wird und für die verschiedenen Veteilmaschinen benutzbar ist, besteht, wobei der Mikroprozessor einen Rechner umfaßt, der sich auf die

# EP 0201658 B1

verschiedenen Verteilmaschinen abstimmt, wobei das Abstimmen auf die verschiedenen Verteilmaschinen über ein Codierungssystem zum Erkennen der jeweiligen Besonderheiten der jeweiligen Verteilmaschine erfolgt, wobei über das Codierungssystem von dem Grundelement (1) automatisch erkannt wird, welche Verteilmaschine angekoppelt ist und/oder welche Teilbreiten die betreffende Verteilmaschine aufweist,

– daß in dem Mikroprozessor (2) des Grundelementes (1) verschiedene Rechner- bzw. Steuerprogramme eingespeichert sind

– und daß aufgrund der übermittelten Signale automatisch das richtige Programm abrufbereit ist.

2. Landmaschine nach Anspruch 1, dadurch gekennzeichnet, daß die Signalübertragungseinrichtung (11) ein System zur drahtlosen Übertragung umfaßt, wobei die Codierungssignale ebenfalls drahtlos übertragbar sind.

3. Landmaschine nach Anspruch 1, dadurch gekennzeichnet, daß die Signalübertragungseinrichtung (11) eine Kabelverbindung (16) aufweist, daß die Kabelverbindung (16) eine trennbare Steckverbindung (17) aufweist und daß die Steckverbindung (17) Elemente (18) aufweist, die derart ausgebildet sind, daß der Mikroprozessor (2) erkennt, welche Verteilmaschine (5) angeschlossen ist.

4. Landmaschine nach Anspruch 3, dadurch gekennzeichnet, daß in dem Mikroprozessor (2) verschiedene Rechnerprogramme eingespeichert sind und daß über die hergestellte Steckverbindung (17) aus dem Mikroprozessor (2) automatisch das richtige Rechnerprogramm abrufbar ist.

5. Landmaschine nach einem der vorstehenden Ansprüche, dadurch gekennzeichnet, daß der Mikroprozessor (2) über das Codierungssystem erkennt, in welcher Form die Gesamtarbeitsbreite (B) der Maschine in Teilbreiten (b) und in wieviel Teilbreiten (b) die Gesamtarbeitsbreite (B) der Maschine zerlegbar ist.

6. Landmaschine nach Anspruch 5, dadurch gekennzeichnet, daß die Teilbreiten (b) über eine Fernbedienung (20) durch Abschalten der entsprechenden Dosierelemente ab- bzw. zuschaltbar sind und daß der Mikroprozessor (2) automatisch erkennt, welche bzw. wieviele Teilbreiten ab- bzw. zugeschaltet sind.

7. Landmaschine nach Anspruch 1, dadurch gekennzeichnet, daß der Mikroprozessor (2) über das Codierungssystem erkennt, welche Arbeitsbreite (B) die angeschlossene Verteilmaschine aufweist.

8. Landmaschine nach Anspruch 5 oder 7, dadurch gekennzeichnet, daß der Mikroprozessor (2) über das Codierungssystem erkennt, welche Breite jede Teilbreite aufweist.

## Claims

1. An agricultural machine comprising a tractor (3, 4) and, coupled to it, agricultural distributing machines (5), such as sowing or seeding machines (9, 10), fertiliser spreaders (6, 7) and field sprayers (8), exhibiting a dosing system, which comprises an electronic dosing device (13) provided with sensors and a basic element (1) with a microprocessor (2), the basic element (1) is connected to this dosing device by means of a signal transmission means (11, 14, 16, 19), whereby the dosing system is used with the distributing machines (5) that are coupled to the tractor (3, 4) and it also takes care of the respective working widths and/or partial widths of the distributing machines (5), wherein the electronic dosing system comprises a first section, namely to define the electronic dosing device (13) serving the machine, this device being located on the respective machine, and a second section, namely to house the basic element (1) with the microprocessor (2), which is located on the tractor and which can be used with the several distributing machines, whereby the microprocessor comprises a computer which coordinates with the various distributing machines, whereby this co-ordination with the various distributing machines is effected by means of a coding system, so that the individual characteristics of the respective distributing machine can be recognised, whereby by means of this coding system the basic element (1) automatically recognises which distributing machine is coupled to the tractor and/or which partial widths the respective distributing machine exhibits (5), wherein various computer and control programs are stored in the microprocessor (2) in the basic element (1), and wherein the signals transmitted automatically cause the correct program to be called up.

2. An agricultural machine as claimed in claim 1, wherein the signal transmission means (11) comprises a system for radio transmission, whereby the coding signals can also be transmitted by radio.

3. An agricultural machine as claimed in claim 1, wherein the signal transmission means (11) exhibits a cable connection (16), wherein the cable connection (16) is a separable plug-in connector (17) and wherein the plug-in connector (17) exhibits elements (18), which are designed in such a way that the microprocessor (2) recognises which distributing machine (5) has been connected.

4. An agricultural machine according to claim 3, wherein various computer programs are stored in the microprocessor (2), and wherein as the plug-in connection (17) is made, the correct computer program is automatically called up from the microprocessor (2).

5. An agricultural machine according to any one of the above claims, wherein the microprocessor (2) recognises through the coding system how the overall working width (B) of the machine is divided into partial widths (b) and how many partial widths (b) comprise the overall working width (B) of the machine.

6. An agricultural machine according to claim 5, wherein the partial widths (b) can be selected or removed by remote control (20) by removing the appropriate dosing elements, and wherein the microprocessor (2) automatically recognises which and how many partial widths have been removed or selected.

5

7. An agricultural machine according to claim 1, wherein the microprocessor (2) recognises through the coding system the working width of the attached distributing machine.

8. An agricultural machine according to claims 5 or 7, wherein the microprocessor (2) recognises through the coding system the width of each partial width.

## Revendications

1. Machine agricole comprenant und tracteur (3, 4) et un distributeur (5) tel qu'un semoir (9, 10), un distributeur d'engrais (6, 7), un pulvérisateur agricole (8) avec un dispositif de dosage, appareil relié au tracteur agricole et qui se compose d'un doseur électronique (13) équipé des capteurs et d'un élément de base relié au doseur par une installation de transmission de signaux (11, 14, 16, 19) et d'un microprocesseur (2), le système de dosage étant utilisé sur le distributeur (5) respectif relié au tracteur (3, 4), et la largeur de travail respective et/ou la largeur partielle des distributeurs (5) étant prises en compte, machine agricole caractérisée en ce que le doseur électronique se compose d'une première partie à savoir: du doseur (13) électronique servant à définir la machine et qui est monté sur la machine respective ainsi que d'une seconde partie à savoir: de l'élément de base (1) muni du microprocesseur (2) qui est monté sur le tracteur et peut être utilisé sur différents distributeurs, le microprocesseur comprenant un calculateur qui s'accorde aux différents distributeurs, l'accord sur ces différents distributeurs se faisant par un système de codage qui reconnait les caractéristiques respectives des distributeurs correspondants et le système de codage est détecté automatiquement par l'élément de base (1) associé au distributeur et/ou qui définit les largeurs partielles du distributeur (5) correspondant, le microprocesseur (2) de l'élément de base (1) contenant en mémoire différents programmes de calcul et de commande et les signaux transmis permettent d'appeler automatiquement le programme correct.

2. Machine agricole selon la revendicatin 1, caractérisée en ce que l'installation de transmission de signaux (11) comprend un système de transmission de signaux par une liaison sans fil, les signaux de codage étant également transmis par la liaison sans fil.

3. Machine agricole selon la revendication 1, caractérisée en ce que l'installation de transmission de signaux (11) comporte une liaison par câble (16), cette liaison par câble (16) étant munie d'une liaison par enfichage (17) amovible et en ce que la liaison par enfichage (17) comporte des éléments (18) réalisés de manière que le microprocesseur (2) reconnaisse le distributeur (5) utilisé.

4. Machine agricole selon la revendication 3, caractérisée en ce que le microprocesseur (2) contient en mémoire différents programmes de calcul et en ce que la liaison par enfichage (17) réalisée permet au microprocesseur (2) d'appeler automatiquement le programme de calcul correct.

5. Machine agricole selon l'une des revendications précédentes, caractérisée en ce que le microprocesseur (2) reconnait par le système de codage la forme suivant laquelle la largeur totale (B) de la machine est décomposable en largeurs partielles (b) et le nombre de largeurs partielles (b) composant la largeur totale (B) de la machine.

6. Machine agricole selon la revendication 5, caractérisée en ce que les largeurs partielles (b) peuvent être mises en œuvre ou coupées par une télécommande (20) par la mise en œuvre ou la coupure des éléments de dosage correspondants et en ce que le microprocesseur (2) reconnait automatiquement les largeurs partielles et le nombre des largeurs partielles mises en œuvre ou coupées.

7. Machine agricole selon la revendication 1, caractérisée en ce que le microprocesseur (2) reconnait par le système de codage la largeur de travail (B) du distributeur utilisé.

8. Machine agricole selon les revendications 5 ou 7, caractérisée en ce que le microprocesseur (2) reconnait par le système de codage la largeur de chaque largeur partielle.

FIG. 2

FIG. 1

FIG. 4

FIG. 5

FIG. 6

FIG. 3

FIG. 7

FIG. 8

EP 0201658 B1

FIG.10

FIG.9

FIG.12

FIG.13

FIG.14

FIG.15

FIG.11

FIG.16

EP 0201658 B1